# EUROPÄISCHE PATENTSCHRIFT

(11) **EP 0 742 064 B1**
(45) Veröffentlichungstag und Bekanntmachung des Hinweises auf die Patenterteilung: **26.01.2000**
(21) Anmeldenummer: 96105404.6
(22) Anmeldetag: 04.04.1996
(51) Int. Cl.: B23B 29/32

(54) **Werkzeugrevolver**
Turret
Tourelle

(30) Priorität: 09.05.1995 DE 29507674 U
(43) Veröffentlichungstag der Anmeldung: 13.11.1996
(73) Patentinhaber: Sauter Feinmechanik GmbH, D-72555 Metzingen (DE)
(72) Erfinder: Sahm, Detlef, Dr., 73262 Reichenbach/Fils (DE)
(74) Vertreter: Patentanwälte Bartels und Partner

(56) Entgegenhaltungen:
- DE-A- 3 702 424

## Beschreibung

Die Erfindung bezieht sich auf einen Werkzeugrevolver für Werkzeugmaschinen, der die Merkmale des Oberbegriffs des Anspruches 1 aufweist.

Bei bekannten Werkzeugrevolvern dieser Art (DE 37 02 424 C2, DE 39 30 221 C2) können übliche Revolvergehäuse nicht ohne Abänderung verwendet werden. So lehrt die DE 37 02 424 C2 den Revolverkopf in Y-Richtung am Revolvergehäuse zu führen und die Antriebseinrichtung für die Verfahrbarkeit in Y-Richtung im Revolvergehäuse vorzusehen. Das Revolvergehäuse muß daher an die Verfahrbarkeit in Y-Richtung angepaßt sein und entsprechend ausgestaltet sein.

Der Erfindung liegt daher die Aufgabe zugrunde, einen Werkzeugrevolver der eingangs genannten Art zu schaffen, der es ermöglicht, ein übliches Revolvergehäuse zu verwenden, ohne dieses abändern zu müssen. Diese Aufgabe löst ein Werkzeugrevolver mit den Merkmalen des Anspruches 1.

Dadurch, daß das Revolvergehäuse auf der der Schlittenführung abgekehrten Seite an der Trägerplatte befestigt werden kann, bedarf es keiner Abänderung, weil das Revolvergehäuse ebenso wie an einem Kreuzsupport oder dergleichen mittels Schrauben an der Trägerplatte befestigt werden kann.

Zweckmäßigerweise ist das Revolvergehäuse mit in X-Richtung verlaufender Drehachse des Revolverkopfes an der Trägerplatte festgelegt.

Der Träger weist eine mit der Werkzeugmaschine verbindbare Grundplatte und zwei auf dieser lotrecht stehende Seitenwände auf, an denen die Schlittenführung vorgesehen ist, vorzugsweise handelt es sich dabei um eine vorgespannte Wälzführung. Im Abstand oberhalb der Grundplatte ist vorzugsweise eine mit den Seitenwänden einstückig ausgebildete oder mit ihnen verbundene Tragplatte vorgesehen, die zwischen zwei die Schlittenführung bildenden Profilstäben ein Lager für eine Spindel und im Abstand von dieser einen die Spindel antreibenden Elektromotor trägt.

Die Spindel ist vorteilhafterweise axial unverschiebbar im Bereich ihres oberen Endes in dem von der Tragplatte getragenen Lager und im Bereich ihres unteren Endes in einem zweiten Lager drehbar gelagert.

Vorteilhaft ist ein AC-Servomotor als Antriebsmotor für die Spindel sowie ein Antrieb der Spindel über einen Zahnriemen.

Die Spindelmutter, welche fest mit dem Schlitten verbunden ist, weist vorzugsweise, und zwar für beide Verstellrichtungen, eine Endlagendämpfung auf. Der Antrieb kann dann in der Endlage mittels einfacher Endschalter aus- oder umgeschaltet werden. Bei einer bevorzugten Ausführungsform sind als für beide Verstellrichtungen wirksame Endlagendämpfungen zwei Tellerfederpakete gleichachsig zur Spindel und diametral zu ihr in der Spindelmutter angeordnet.

Soweit eine Versteifung erforderlich ist, kann diese mittels Platten erfolgen.

Im folgenden ist die Erfindung an Hand eines in der Zeichnung dargestellten Ausführungsbeispiel im einzelnen erläutert. Es zeigen in schematischer Darstellung
- Fig. 1: eine Seitenansicht des Ausführungsbeispiels,
- Fig. 2: eine Ansicht des Ausführungsbeispiels mit einer Blickrichtung auf die Stirnseite des Revolverkopfes,
- Fig. 3: eine Draufsicht von oben auf das Ausführungsbeispiel,
- Fig. 4: in vergrößerter Darstellung einen Ausschnitt einer Draufsicht auf das Ausführungsbeispiel bei abgenommener Deckplatte,
- Fig 5: eine Seitenansicht des Ausführungsbeispiels bei abgenommener Seitenplatte.

Ein Werkzeugrevolver für Werkzeugmaschinen, der dann, wenn er auf einem Kreuzsupport angeordnet ist, nicht nur in Richtung der X-Achse 32 und der Z-Achse 33, die auch in ihrer Richtung vertauscht sein können, sondern auch in Richtung der Y-Achse 6 verfahrbar ist, weist einen Träger mit einer Grundplatte 1 auf, welche auf einem Support 2 der Werkzeugmaschine aufsetzbar und mit diesem mittels Schrauben 3 verbindbar ist. Mit der Grundplatte 1 verbundene Seitenwände 4 verlaufen lotrecht zur Grundplatte 1 sowie parallel und im Abstand voneinander. An ihrer einen Stirnseite ist je ein Profilstab 5 festgelegt, die zusammen eine in Richtung der Y-Achse 6 verlaufende Schlittenführung bilden.

In dieser Schlittenführung ist längsverschiebbar ein Schlitten geführt, der vier mit den Profilstäben 5 zusammenwirkende Führungselemente 7 sowie eine ebene Trägerplatte 8 aufweist, an deren einer Seite die Führungselemente 7 anliegen und mittels Schrauben festgelegt sind.

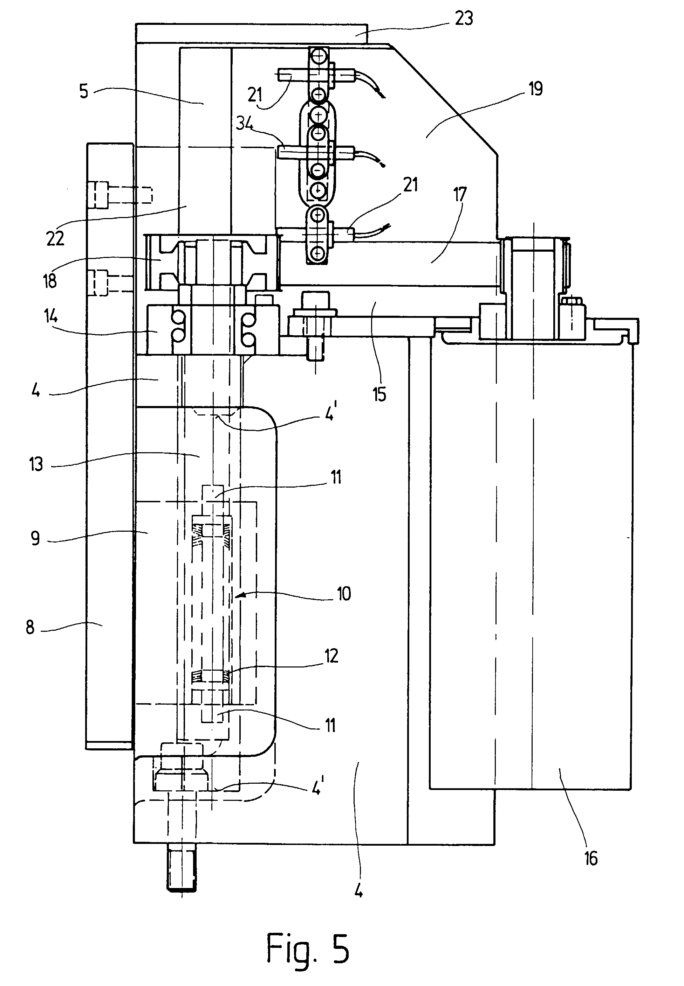

Mit der Trägerplatte 8 ist auch eine Spindelmutter 9 fest verbunden, die an der gleichen Seite wie die Führungselemente 7 und in der Mitte zwischen diesen an der Trägerplatte anliegt, und zwar mit in Y-Richtung verlaufender Längsachse ihrer Gewindebohrung. Zwischen dieser Gewindebohrung und den beiden Führungselementen 7 sind in der Spindelmutter 9 diametral zu deren Längsachse zwei gleich ausgebildete Endlagendämpfer 10 angeordnet, die in beiden Verstellrichtungen des Schlittens wirksam sind. Wie Fig. 5 zeigt, weisen die beiden Endlagendämpfer 10 einen in beiden Verschieberichtungen des Schlittens in der Spindelmutter 9 verschiebbar geführten Bolzen 11 auf, der über beide Stirnseiten der Spindelmutter 9 übersteht und entgegen der Kraft eines Tellerfederpaketes 12 verschiebbar ist. Die Enden der Bolzen 11 sind auf eine obere und eine untere Anschlagfläche 4' ausgerichtet, die an den Seitenwänden 4 vorgesehen sind.

Die Spindelmutter 9 wird von einer sich in Y-Richtung erstreckenden Spindel 13 durchdrungen, welche im Bereich ihres oberen Endabschnittes in einem Wälzlager 14 drehbar gelagert ist, das in einer Tragplatte 15 angeordnet ist, welche auf dem oberen Rand der Seitenwände 4 aufliegt und mit diesen verschraubt ist.

Die Tragplatte 15 erstreckt sich über den der Trägerplatte 8 abgekehrten Rand der Seitenwände 4 hinaus und trägt hier einen von unten her an ihr angeflanschten Servomotor 16, dessen zur Spindel 13 parallel verlaufende Motorwelle über die Tragplatte 15 nach oben übersteht und hier eine Riemenscheibe trägt, über die ein Zahnriemen 17 geführt ist. Dieser Zahnriemen 17 ist andererseits über eine Riemenscheibe 18 geführt, die oberhalb des Wälzlagers 14 fest auf der Spindel 13 angeordnet ist.

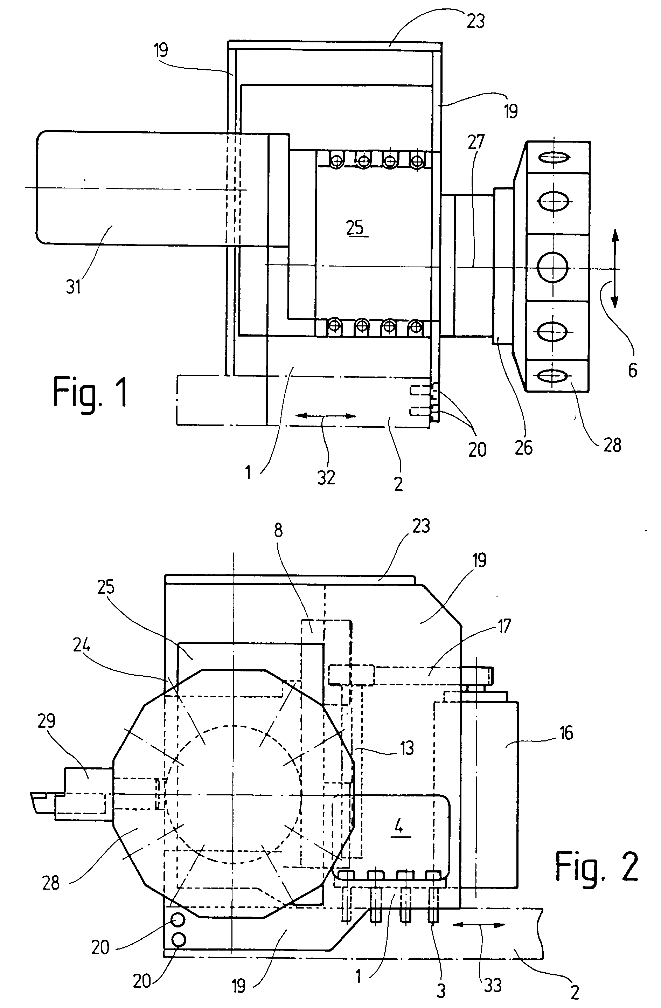

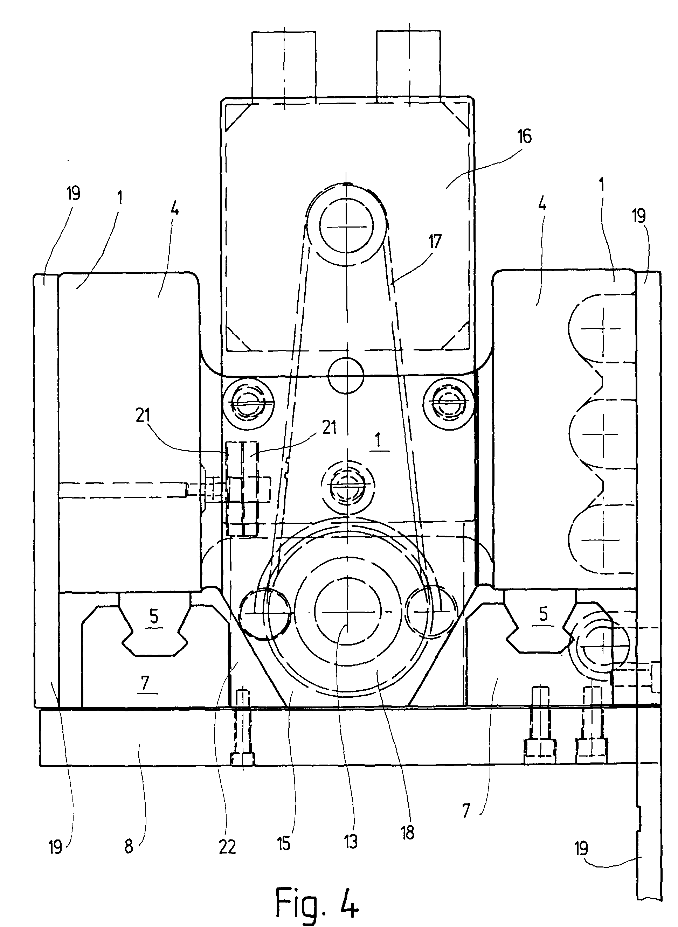

An den beiden lotrecht zur Trägerplatte 8 verlaufenden Seitenrändern der Grundplatte 1 ist je eine parallel zur Seitenwand 4 verlaufende Versteifungsplatte 19 vorgesehen, die fest mit der Grundplatte 1 verbunden sind. Wie Fig. 4 zeigt, erstreckt sich die eine der beiden Versteifungsplatten 19 bis zur Trägerplatte 8, während, wie die Fig. 2 und 4 zeigen, die andere Versteifungsplatte 19 in einem unteren Abschnitt sich über die Trägerplatte 8 hinaus und hier außerdem nach unten über die Unterseite der Grundplatte 1 hinaus erstreckt. Dieser über die Unterseite der Grundplatte 1 überstehende Abschnitt kann zusätzlich mit dem Support 2 verschraubt werden, was mit den beiden Schrauben 20 in den Fig. 1 und 2 angedeutet ist.

Wie Fig. 5 zeigt, sind an der einen Versteifungsplatte 19 oberhalb der Tragplatte 15 Endschalter 21 festgelegt, die mit einer Fahne 22 zusammenwirken, welche von der der Schlittenführung zugekehrten Seite der Trägerplatte 8 absteht und auf die Endschalter 21 ausgerichtet ist.

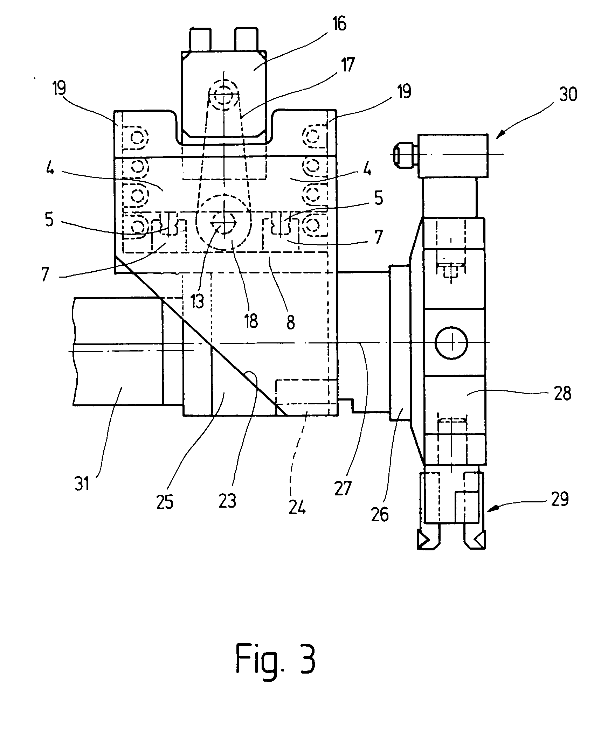

Auf den beiden Versteifungsplatten 19 liegt eine Deckplatte 23 auf, welche mit den Versteifungsplatten 19 verschraubt ist und diese miteinander verbindet, wie insbesondere auch Fig. 3 zeigt. Diese Deckplatte 23 steht im Ausführungsbeispiel im Abstand oberhalb der Trägerplatte 8 über diese auf der der Schlittenführung abgekehrten Seite über. Ihr von der Trägerplatte 8 entferntes Ende ist über eine Stütze 24 mit dem nach unten über die Grundplatte 1 vorspringenden Abschnitt der einen Seitenwand 19 verbunden, wodurch eine zusätzliche Versteifung erreicht wird.

Ein in üblicherweise ausgebildetes Revolvergehäuse 25, in dem drehbar und in wählbaren Winkelstellungen mit dem Revolvergehäuse 25 verriegelbar ein Revolverkopf 26 gelagert ist, liegt mit seiner Anlagefläche, die bei einer unmittelbaren Befestigung auf einem Support auf diesen aufgelegt wird, an der der Schlittenführung abgekehrten Seite der Trägerplatte 8 an und ist mit letzterer mittels Schrauben verbunden, und zwar derart, daß die Drehachse 27 des Revolverkopfes 26, der eine Werkzeugscheibe 28 mit Aufnahmen für Werkzeuge, Werkzeughalter 29 oder Spindelköpfe 30 versehen ist, sich in Richtung der X-Achse 32, bei der es sich auch um die Z-Achse handeln könnte, erstreckt. Wie insbesondere die Fig. 1 und 3 zeigen, liegt das Revolvergehäuse 25 zwischen der Trägerplatte 8 und der Stütze 24 und ragt über diejenige der beiden Versteifungsplatten 19 hinaus, welche das Revolvergehäuse 25 untergreift, ohne dessen Verschiebung in der Y-Achse zu behindern. An die dem Revolverkopf 26 abgekehrte Stirnseite des Revolvergehäuses 25 ist sein Antriebsmotor 31 angefügt.

Bei einer Spindelsteigungsfehlerkompensation läßt sich eine ausreichende Positioniergenauigkeit des Schlittens und damit des Revolverkopfes 26 erreichen. Wenn die eine oder andere Endlage erreicht ist, löst die Fahne 22 zusammen mit den Endschaltern 21 die Abschaltung oder Umschaltung des Servomotors 16 aus. Die Endlagendämpfung wirkt nach dem Erreichen der Endschalter 21 durch die Fahne 22. Ein Endschalter 34 dient als Referenzpunktschalter.

## Patentansprüche

1. Werkzeugrevolver für Werkzeugmaschinen mit
a) einem in einem Revolvergehäuse (25) drehbar gelagerten und mit diesem in wählbaren Winkelpositionen verriegelbaren Revolverkopf (26), der Aufnahmen für Werkzeuge und/oder Werkzeughalter (29) aufweist,
b) einem das Revolvergehäuse (25) tragenden Schlitten (7, 8), der für ein Verfahren des Revolvergehäuses (25) relativ zu einem den Werkzeugrevolver tragenden Teil der Werkzeugmaschine quer zur Drehachse (27) des Revolverkopfes (26) in einer Schlittenführung (5) geführt ist, die an einem mit der Werkzeugmaschine, insbesondere einem Kreuzsupport derselben, verbindbaren Träger (1, 4, 5) vorgesehen ist, und
c) einer Schlittenverstellvorrichtung,
dadurch gekennzeichnet, daß
d) der Schlitten (7, 8) in einer Y-Richtung geführt ist und eine in einer von der Y-Richtungund einer Z-Richtung oder in einer von der Y-Richtung und einer X-Richtung aufgespannten Ebene liegende Trägerplatte (8) aufweist,
e) welche das Revolvergehäuse (25) von der Schlittenführung (5) trennt,
f) und daß der Träger (1, 4, 5) eine mit der Werkzeugmaschine verbindbare Grundplatte (1) und zwei auf dieser lotrecht stehende Seitenwände (4) aufweist, an denen die Schlittenführung (5) vorgesehen ist.

2. Werkzeugrevolver nach Anspruch 1, dadurch gekennzeichnet, daß das Revolvergehäuse (25) mit parallel zur Trägerplatte (8) liegender Drehachse (27) des Revolverkopfes (26) an der Trägerplatte (8) festgelegt ist.

3. Werkzeugrevolver nach Anspruch 1 oder 2, dadurch gekennzeichnet, daß der Träger (1, 4, 5) eine im Abstand oberhalb der Grundplatte (1) mit den Seitenwänden verbundene oder einstückig ausgebildete, parallel zur Grundplatte (1) liegende Trägerplatte (15) aufweist, die zwischen zwei die Schlittenführung bildenden Profilstäben (5) ein Lager (14) für eine Spindel (13) und im Abstand von dieser einen die Spindel (13) antreibenden Elektromotor (16) trägt.

4. Werkzeugrevolver nach Anspruch 3, dadurch gekennzeichnet, daß die Spindel (13) axial unverschiebbar im Bereich ihres oberen Endes in dem von der Tragplatte (15) getragenen Lager (14) drehbar gelagert ist.

5. Werkzeugrevolver nach Anspruch 3 oder 4, dadurch gekennzeichnet, daß der Elektromotor ein Servomotor (16) mit parallel zur Spindel (13) liegender Motorwelle ist, und daß der Antrieb der Spindel (13) über einen Zahnriemen (17) erfolgt.

6. Werkzeugrevolver nach einem der Ansprüche 1 bis 5, dadurch gekennzeichnet, daß die Schlittenführung als vorgespannte Wälzführung ausgebildet ist.

7. Werkzeugrevolver nach einem der Ansprüche 1 bis 6, dadurch gekennzeichnet, daß an der der Schlittenführung (5) zugewandten Seite der Trägerplatte (8) eine auf der Spindel (13) angeordnete Spindelmutter (9) festgelegt ist, die für beide Verstellrichtungen eine Endlagendämpfung (10) aufweist.

8. Werkzeugrevolver nach Anspruch 7, dadurch gekennzeichnet, daß die Endlagendämpfung (10) wenigstens ein Tellerfederpaket (12) aufweist.

9. Werkzeugrevolver nach Anspruch 8, dadurch gekennzeichnet, daß zwei in beiden Verstellrichtungen des Schlittens wirksame Tellerfederpakete (12) gleichachsig zur Spindel (13) und diametral zu ihr in der Spindelmutter (9) auf relativ zur Spindelmutter (9) längsverschiebbaren Bolzen (11) angeordnet sind.

10. Werkzeugrevolver nach einem der Ansprüche 1 bis 9, gekennzeichnet durch eine Versteifungsplatte (19), die parallel zu einer Seitenwand (4) angeordnet ist, über welche der Revolverkopf (26) hinausragt, mit einer Grundplatte (1) fest verbunden ist und mit einem den Werkzeugrevolver tragenden Teil (2) der Werkzeugmaschine unterhalb des Revolvergehäuses (25) verschraubbar ist.

11. Werkzeugrevolver nach Anspruch 10, gekennzeichnet durch eine Deckplatte (23), welche mit der oberen Randzone der Versteifungsplatte (19) verbunden ist, über die Trägerplatte (8) im Abstand oberhalb derselben auf der das Revolvergehäuse (25) tragenden Seite übersteht und über ein Verbindungsteil (24), zwischen dem und der Trägerplatte (8) sich das Revolvergehäuse (25) befindet, mit einem das Revolvergehäuse (25) untergreifenden Teil der Versteifungsplatte (19) verbunden ist.

## Claims

1. Turret for machine tools with
a) a turret head (26) on a pivoting bearing in a turret housing (25) and interlocking with the latter in optional angle positions which displays recipients for tools and/ or tool holders (29),
b) a cradle (7, 8) bearing the turret housing (25) which is guided for the turret housing (25) to travel relative to a part of the machine tool bearing the turret diagonally to the axis of rotation (27) of the turret head (26) in a cradle guideway (5) which is arranged on a bearer which can be connected with the tool machine, especially a cross support of the latter (1, 4, 5), and
c) a cradle adjustment device,
characterised by the fact that
d) the cradle (7, 8) is guided in a direction Y and displays a base plate (8) lying clamped in flat formation from direction Y to direction Z or from direction Y to direction X
e) which separates the turret housing (25) from the cradle guideway (5),
f) and that the bearer (1, 4, 5) displays a sole plate (1) which can be connected with the machine tool and two side walls (4) standing perpendicular to the latter on which walls the cradle guideway (5) is provided.

2. Turret according to Claim 1, characterised by the fact that the turret housing (25) is fixed onto the bearer plate (8) with axes of rotation (27) of the turret head (26) lying parallel to the bearer plate (8).

3. Turret according to Claim 1 or 2, characterised by the fact that the bearer (1, 4, 5) demonstrates a base plate (15) lying at a distance above the sole plate (1) connected with the side walls or constructed all of a piece, parallel to the sole plate (1), which, between two profile rods (5) which form the cradle guideway, holds a bearing (14) for a spindle (13) and at a distance from this latter, an electromotor (16) driving the spindle (13).

4. Turret according to Claim 3, characterised by the fact that the spindle (13) which is axially stationary in the region of its upper end is pivotable in the bearing (14) supported by the base plate (15).

5. Turret according to Claim 3 or 4, characterised by the fact that the electromotor is a servomotor (16/) with a motor shaft running parallel to the spindle (13), and that the spindle (13) is driven via a toothed belt (17).

6. Turret according to one of Claims 1 to 5, characterised by the fact that the cradle guideway is designed in the form of a pre-tensioned anti-friction guideway.

7. Turret according to one of Claims 1 to 6, characterised by the fact that the side of the base plate (8) turned towards the cradle guideway (5) is fastened to a spindle nut (9) located on the spindle (13) which demonstrates an end of travel buffer (10) for both directions of travel.

8. Turret according to Claim 7, characterised by the fact that the end of travel buffer (10) demonstrates at least one disc spring unit (12).

9. Turret according to Claim 8, characterised by the fact that two disc spring units (12) acting in both directions of travel of the cradle are arranged on the same axis as the spindle (13) and diametrically to it in the spindle nut (9) on bolts (11) which are longitudinally displaceable relative to the spindle nut (9).

10. Turret according to one of Claims 1 to 9, characterised by a reinforcement plate (19) which is arranged parallel to one side wall (4) above which the turret head (26) projects, which is fastened to a sole plate (1) and can be screwed onto a part (2) of the machine tool bearing the turret below the turret housing (25).

11. Turret according to Claim 10, characterised by a cover plate (23), which is connected with the upper edge zone of the reinforcement plate (19), stands proud above the bearer plate (8) at a distance above this on the side which supports the turret housing (25) and by means of a connecting part (24) between which and the bearer plate (8) the turret housing (25) is located, which is connected with a part of the reinforcement plate (19) which grips underneath the turret housing (25).

## Revendications

1. Tourelle porte-outils pour machines-outils, comprenant
a) une tête de tourelle (26), qui est montée de manière à pouvoir pivoter dans un boîtier de tourelle (25), qui peut être bloquée avec celui-ci dans diverses positions angulaires au choix et qui est munie de logements destinés à recevoir des outils et/ou des porte-outils (29),
b) un chariot (7, 8) qui porte le boîtier de la tourelle (25) et qui, pour déplacer le boîtier de la tourelle (25) par rapport à une partie de la machine-outil portant la tourelle porte-outils, est guidé transversalement à l'axe de rotation (27) de la tête de tourelle (26) dans une glissière pour chariot (5), qui est prévue sur un support (1, 4, 5) pouvant être assemblé avec la machine-outil, en particulier un chariot en croix de celle-ci,
c) et un dispositif de déplacement du chariot,
caractérisée en ce que
d) le chariot (7, 8) est déplacé dans le sens Y et comporte une plaque de support (8) située dans un plan développé par le sens Y et un sens Z ou développé dans le sens Y et un sens X,
e) laquelle plaque de support constitue la séparation entre le boîtier de la tourelle (25) et la glissière pour chariot (5),
f) et en ce que le support (1, 4, 5) comporte une plaque de base (1) assemblée avec la machine-outil et deux parois latérales (4) perpendiculaires à ladite plaque de base et contre lesquelles il est prévu de poser la glissière pour chariot (5).

2. Tourelle porte-outils selon la revendication 1, caractérisée en ce que le boîtier de la tourelle (25) est fixé contre la plaque de support (8), de façon que l'axe de rotation (27) de la tête de la tourelle (26) soit parallèle à la plaque de support (8).

3. Tourelle porte-outils selon la revendication 1 ou 2, caractérisée en ce que le support (1, 4, 5) est muni d'une plaque de support (15) disposée parallèlement à la plaque de base (1) à une distance donnée au-dessus de la plaque de base (1) et assemblée avec les parois latérales ou formée d'une seule pièce avec celles-ci, laquelle plaque de support porte un palier (14) pour une broche (13), disposé entre les deux tiges profilées (5) formant la glissière pour chariot, et, à une distance donnée de ladite broche, un moteur électrique (16) destiné à actionner la broche (13).

4. Tourelle porte-outils selon la revendication 3, caractérisée en ce que la broche (13) est logée de façon à ne pas pouvoir se déplacer dans le sens axial dans la zone de son extrémité supérieure et de manière à pouvoir pivoter dans le palier (14) supporté par la plaque d'appui (15).

5. Tourelle porte-outils selon la revendication 3 ou 4, caractérisée en ce que le moteur électrique est un servomoteur (16), dont l'arbre moteur est parallèle à la broche (13), et en ce que la broche (13) est entraînée par une courroie dentée (17).

6. Tourelle porte-outils selon l'une quelconque des revendications 1 à 5, caractérisée en ce que la glissière pour chariot est conçue en forme de guidage précontraint à rouleaux.

7. Tourelle porte-outils selon l'une quelconque des revendications 1 à 6, caractérisée en ce qu'un écrou pour broche (9), monté sur la broche (13), est fixé contre le côté de la plaque de support (8) orienté vers la glissière pour chariot (5), lequel écrou pour broche est muni d'un amortisseur de fin de course (10) pour les deux sens de déplacement.

8. Tourelle porte-outils selon la revendication 7, caractérisée en ce que l'amortisseur de fin de course (10) comporte au moins un groupe de ressorts à lames (12).

9. Tourelle porte-outils selon la revendication 8, caractérisée en ce que deux groupes de ressorts à lames (12), agissant dans les deux sens du déplacement du chariot, sont disposés dans l'écrou pour broche (9) sur un même axe par rapport à la broche (13) et diamétralement opposés par rapport à celle-ci, sur des boulons (11) susceptibles de se déplacer dans le sens longitudinal par rapport à l'écrou pour broche (9).

10. Tourelle porte-outils selon l'une quelconque des revendications 1 à 9, caractérisée par une plaque de renfort (19) qui est parallèle à une paroi latérale (4), au-dessus de laquelle s'avance en saillie la tête de tourelle (26), qui est assemblée de manière inamovible avec une plaque de base (1) et qui peut être vissée contre une partie (2) de la machine-outil portant la tourelle porte-outils, en dessous du boîtier de la tourelle (25).

11. Tourelle porte-outils selon la revendication 10, caractérisée par une plaque de couverture (23), qui est assemblée avec la zone de bordure supérieure de la plaque de renfort (19), qui s'avance en saillie au-delà de la plaque de support (8) à une distance donnée au-dessus de celle-ci, sur le côté qui porte le boîtier de la tourelle (25) et qui est assemblée au moyen d'une pièce de liaison (24), entre laquelle et la plaque de support (8) est disposé le boîtier de la tourelle (25), avec une partie de la plaque de renfort (19) s'engageant en dessous du boîtier de la tourelle (25).
